# EUROPÄISCHE PATENTSCHRIFT

(11) **EP 3 198 042 B1**
(45) Veröffentlichungstag und Bekanntmachung des Hinweises auf die Patenterteilung: **06.06.2018**
(21) Anmeldenummer: 15750682.5
(22) Anmeldetag: 06.08.2015
(51) Int. Cl.: C21C 5/52, F27D 19/00, F27D 21/00

(54) **METALLINDUSTRIEANLAGE UND VERFAHREN ZUR VERFOLGUNG EINES GEFÄSSES, INSBESONDERE EINES METALLURGISCHEN GEFÄSSES**
METAL INDUSTRY SYSTEM AND METHOD FOR TRACKING A CONTAINER, IN PARTICULAR OF A METALLURGICAL CONTAINER
INSTALLATION MÉTALLURGIQUE ET PROCÉDÉ DE SUIVI D'UN RÉCIPIENT, EN PARTICULIER UN RÉCIPIENT MÉTALLURGIQUE

(30) Priorität: 24.09.2014 EP 14186186
(43) Veröffentlichungstag der Anmeldung: 02.08.2017
(73) Patentinhaber: Primetals Technologies Austria GmbH, 4031 Linz (AT)
(72) Erfinder: ROHRHOFER, Andreas, 4020 Linz (AT); HARTL, Franz, 4720 Kallham (AT); KUEHAS, Thomas, 4225 Luftenberg (AT); KURZMANN, Thomas, 4614 Marchtrenk (AT)
(74) Vertreter: Metals@Linz
(86) Internationale Anmeldenummer: PCT/EP2015/068136
(87) Internationale Veröffentlichungsnummer: WO 2016/045859

(56) Entgegenhaltungen:
- EP-A1- 2 141 414
- KR-B1- 100 685 049
- US-A1- 2011 251 712

## Beschreibung

In metallurgischen Industrieanlagen werden metallurgische Gefäße eingesetzt, um Roheisenschmelzen, Stahlschmelzen, flüssige Schlacke, Schrott und dergleichen zu transportieren. Zum Beispiel sind im Stahlwerk in den verschiedenen Anlagenteilen (z.B. Konverter, Elektrolichtbogenofen etc.) mehrere Gefäße (je nach Kapazität des Stahlwerks 30 und mehr) im Einsatz. Diese durchlaufen verschiedene Routen zwischen den Anlagenteilen. Die Anlagenbediener und Kranfahrer müssen sicherstellen, dass das richtige Gefäß am richtigen Anlagenort abgestellt ist. Sowohl aus dem Gesichtspunkt der Qualität (möglichst geringe Abkühlung des Roheisens/Stahlbades im Gefäß) als auch aus Energiespargründen ist ein möglichst hoher Heißeinsatz von Gefäßen anzustreben. Die Gefäße im Stahlwerk werden z.B. beheizt, bevor Stahl aus dem Elektrolichtbogenofen/Konverter in sie geleert wird. Bestimmte Stahlqualitäten sollten außerdem nicht nacheinander im gleichen Gefäß transportiert werden, da die geringen Restmengen sich chemisch beeinflussen können (z.B. bestimmte Edelstahlgüten oder auch Stahllegierungen).

Aus diesem Grund werden die im Betrieb eingesetzten metallurgischen Gefäße an verschiedenen Trackingpositionen erfasst. Die so erfassten Informationen werden an ein gemeinsames Leitsystem weiter vermittelt. Je nach Größe des Werks können diese Trackingpositionen weit auseinander liegen: z.B. bei Stahlpfannen als metallurgischem Gefäß sind das der Konverter, die Pfannenöfen, die Umleergrube, die Pfannenfeuer etc.. Bei einem Schlackenkübel als metallurgischem Gefäß sind das der Lichtbogenofen und die Schlackengrube. Bei einem Torpedowagen als metallurgischem Gefäß sind das der Hochofen, die Umleergrube etc.. Es werden ausschließlich kabelgebundene Verbindungen verwendet. Lange Kabel zur Datenverbindung der einzelnen Trackingpositionen zu einer gemeinsamen PLC (Programmable Logic Controller = speicherprogrammierbare Steuerung) sind die Folge daraus und verursachen sehr hohe Kosten und sind auch sehr fehleranfällig.

Aus der KR 100 685 049 B1 ist eine Einrichtung zur Wegverfolgung von Schrottschurren bekannt, bei dem an den Schurren RFID-Transponder angeordnet sind. An vorbestimmten Positionen innerhalb einer metallverarbeitenden Anlage sind RFID-Leser angeordnet, welche mit einer Auswertungseinrichtung verbunden sind und mit dieser kommunizieren. Die RFID-Leser erfassen die Anwesenheit der an den Schurren angeordneten RFID-Transponder und übermitteln entsprechende Erfassungssignale an die Auswertungseinrichtung.

Aus der US 2011/0 251 712 A ist eine metallurgische Anlage bekannt, bei der an Anlagenkomponenten RFID-Transponder angeordnet sind. An vorbestimmten Positionen innerhalb einer metallverarbeitenden Anlage sind RFID-Leser angeordnet, welche mit einer Auswertungseinrichtung verbunden sind und mit dieser kommunizieren. Die RFID-Leser erfassen die Anwesenheit der an den Komponenten angeordneten RFID-Transponder und übermitteln entsprechende Erfassungssignale an die Auswertungseinrichtung.

Aus der EP 2 141 414 A1 ist bekannt, ausgehend von einer Steuerplattform mit Lastkraftwagen drahtlos zu kommunizieren.

Eine erste Aufgabe ist die Angabe einer Metallindustrieanlage mit mehreren Verarbeitungsstationen, zum vereinfachten, fehlerfreien Nachverfolgen eines Gefäßes, welches das oben genannte Problem löst. Die zweite Aufgabe betrifft ein vereinfachtes Verfahren zum Nachverfolgen eines Gefäßes, welches das oben genannte Problem löst.

Die erste Aufgabe wird gelöst durch die Angabe einer Metallindustrieanlage mit mehreren Verarbeitungsstationen, welche ein Gefäß, insbesondere ein metallurgisches Gefäß, zumindest teilweise durchläuft, wobei das Gefäß mit einem Transponder mit Transponderdaten ausgerüstet ist, und wobei in der Metallindustrieanlage zumindest eine erste Trackingposition, welche zumindest eine erste Lesestation umfasst, zum Kommunizieren des an der ersten Trackingposition vorbeifahrenden Gefäßes mit Hilfe des Transponders, insbesondere zum Identifizieren des vorbeifahrenden Gefäßes mit den Transponderdaten, vorgesehen ist und wobei in der Metallindustrieanlage zumindest ein Gateway vorgesehen ist. Die Lesestation umfasst zumindest eine Antenne zum Kommunizieren mit dem Transponder und ein Lesegerät mit einer kabellosen Schnittstelle zum kabellosen Senden zumindest der empfangenen Transponderdaten an das Gateway. Das Gateway umfasst eine kabellose Schnittstelle zur kabellosen Übermittlung zumindest der Transponderdaten von der kabellosen Schnittstelle der Lesestation. Die Lesestation umfasst ein Auswertesystem zum Auswerten der empfangenen Transponderdaten. Alternativ ist dem Gateway ein Auswertesystem nachgeschaltet. Dadurch ist das Gefäß vereinfacht verfolgbar.

Die zweite Aufgabe wird gelöst durch die Angabe eines Verfahrens zur Verfolgung eines metallurgischen Gefäßes in einer Metallindustrieanlage mit mehreren Verarbeitungsstationen, welche das metallurgische Gefäß zumindest teilweise durchläuft, wobei das metallurgische Gefäß mit einem Transponder mit Transponderdaten ausgerüstet wird und wobei das an einer ersten Trackingposition vorbeifahrende Gefäß mit Hilfe des Transponders mit der ersten Trackingposition, umfassend zumindest eine erste Lesestation, kommuniziert, insbesondere das vorbeifahrende Gefäß mit den Transponderdaten identifiziert wird, und wobei die erste Lesestation zumindest die Transponderdaten durch eine kabellose Schnittstelle in der Lesestation kabellos an ein Gateway übermittelt, wobei dem Gateway ein Auswertesystem nachgeschaltet wird.

Für die weitere Beschreibung und Erläuterung werden standesübliche Formulierungen verwendet, welche zum Teil nicht auf Deutsch übersetzt werden, dennoch im deutschen Sprachgebrauch dem Fachmann verständlich sind.

Die Erfindung offenbart eine kabellose Datenverbindung von Trackingpositionen eines Verfolgungssystems, welches innerhalb eines Werks zur Verfolgung von metallurgischen Gefäßen verwendet wird. Für eine Verfolgung von metallurgischen Gefäßen werden typischerweise die Gefäße mit einem Transponder ausgerüstet. Dieser Transponder kann fest oder lose mit dem Gefäß verbunden sein. An mehreren Orten innerhalb eines Werkgeländes, oder aber auch außerhalb des Werksgeländes, befinden sich die Trackingpositionen. Wird ein Gefäß mit Transponder an solch einer Trackingposition vorbei geführt, wird dies durch die dort installierte Lesestation erkannt. Da die einzelnen Trackingpositionen weit voneinander entfernt sein können, werden diese über eine kabellose Schnittstelle untereinander bzw. über ein zentrales Gateway miteinander verbunden. Als zentrales Gateway oder auch Access Point wird jener Wireless Knoten bezeichnet, welcher für die Organisation des so gebildeten Netzwerks verantwortlich ist. Die kabellose Schnittstelle, mit welcher die einzelnen Lesestationen mit dem zentralen Gateway verbunden sind, können beispielsweise mit WLAN, Wireless HART, ISA100 oder jedem anderen Wireless Standard, mit welchem Daten übertragen werden können, realisiert werden.

Durch die Erfindung kann ein Verfolgungssystem von metallurgischen Gefäßen einfach installiert werden, ohne die laufende Produktion zu stören. Erfindungsgemäß können Trackingpositionen auch an schwierigst zugänglichen Positionen realisiert werden. Auch ergibt sich durch die Erfindung eine Kosteneinsparung durch einen Wegfall der Kabel für die Datenanbindung, so dass sich die Installationskosten schnell amortisieren. Vorteilhafterweise ergibt sich durch die Erfindung ein geringer Instandhaltungsaufwand, da keine Kabel vorhanden sind, die beschädigt werden können. Auch ergibt sich eine vereinfachte Zustandsüberwachung der Gefäße.

In den Unteransprüchen sind weitere vorteilhafte Maßnahmen aufgelistet, die beliebig miteinander kombiniert werden können, um weitere Vorteile zu erzielen.

Vorzugsweise ist eine zweite Trackingposition vorgesehen, welche zumindest eine zweite Lesestation umfasst, zum Kommunizieren des vorbeifahrenden Gefäßes mit Hilfe des Transponders, insbesondere zum Identifizieren des vorbeifahrenden Gefäßes mit den Transponderdaten. Dabei sind zumindest die erste und die zweite Trackingposition mit dem Gateway kabellos als auch untereinander kabellos verbunden, wodurch das Gefäß kabellos verfolgbar ist. Die einzelnen Trackingpositionen können sich entweder alle zu einem zentralen Gateway (Access Point) vernetzen oder, z.B. im Falle eines Wireless HART oder ISA100 Netzwerks, in Form eines vernetzten Gitters (einem sogenannten Meshgrid) verbinden. Bei einem Gitter kann sich jede Trackingposition mit jeder anderen Trackingposition vernetzen. Dies hat den Vorteil, dass sehr große Flächen mit nur einem Gateway abgedeckt werden können, gleichzeitig im Falle eines Ausfalls einer Trackingposition aber auch eine Alternativroute über andere Knoten zur Verfügung gestellt werden kann. Dies dient der Erhöhung der Ausfallsicherheit. Es können sich auch entweder alle Trackingpositionen oder nur vereinzelte Trackingpositionen zur Verfolgung von metallurgischen Gefäßen kabellos miteinander verknüpfen.

Alternativ oder zusätzlich weist die Metallindustrieanlage eine zweite Trackingposition auf, welche zumindest eine zweite Lesestation umfasst, zum Kommunizieren des vorbeifahrenden Gefäßes mit Hilfe des Transponders, insbesondere zum Identifizieren des vorbeifahrenden Gefäßes mit den Transponderdaten, und wobei zumindest die erste und die zweite Trackingposition untereinander kabellos verbunden sind, und wodurch die zweite Trackingposition über die erste Trackingposition mit dem Gateway kabellos verbunden ist und wodurch das Gefäß kabellos verfolgbar ist.

Das zentrale Gateway hat eine Schnittstelle, mit welcher die Daten einem Leitsystem bzw. einer Benutzersteuerung zur Verfügung gestellt werden können.

Die Antenne der Lesestation kann beispielsweise eine RFID Antenne oder aber auch eine SAW-Antenne zum Erkennen von SAW Transpondern sein. Auch das Lesegerät kann ein Gerät zum Auslesen von RFID Transpondern oder auch ein Gerät zum Auslesen von SAW-Transpondern sein. Das Auswertesystem wertet die vom Lesegerät erfassten Transponderdaten aus und sendet diese über die kabellose Schnittstelle an ein zentrales Gateway. Alle weiteren in der Anlage installierten Lesestationen tun dies ebenso. Das Gateway wertet die Information, z.B. wann welches Gefäß wo ist, aus und gibt dies an ein zentrales Leitsystem weiter.

Das Auswertesystem holt alle Daten vom zentralen Gateway ab, wertet diese aus und stellt sie dann einem Leitsystem zur Verfügung. Eine Anordnung ohne Auswertesystem ist ebenfalls denkbar. In diesem Fall werden dem Leitsystem Rohdaten zur Verfügung gestellt.

Bevorzugt weist die Lesestation zumindest einen Sensor, insbesondere einen Neigungs- und/oder Beschleunigungssensor, auf, welcher die Neigungsdaten der Antenne ermittelt. Hierbei ist der Sensor beispielsweise an der Antenne vorgesehen. Das Auswertesystem kann daher als zusätzliche Eingabe zumindest den aus diesem Neigungssensor und/oder Beschleunigungssensor gelieferten Datensatz heranziehen. Die Neigungssensoren und/oder Beschleunigungssensoren werden vorzugsweise an der Antenne, insbesondere der RFID-Antenne oder SAW-Antenne befestigt. Aus dem Neigungssensor und/oder Beschleunigungssensor wird daher die Neigung der Antenne ermittelt. Das Ergebnis kann verwendet werden, um festzustellen, ob die Antenne von z.B. einem vorbeifahrenden Fahrzeug oder Kran verstellt wurde. Somit ist eine Überwachung der korrekten Ausrichtung der Antenne durch Neigungs-/Beschleunigungssensoren möglich.

Bevorzugt umfasst die Lesestation einen Temperatursensor, zum Messen der Temperatur der Antenne und/oder der Lesestation selbst. Das Auswertesystem kann daher als zusätzliche Eingabe zumindest den Datensatz dieses Temperatursensors heranziehen. Mit diesem kann die Temperatur der Antenne oder die Temperatur der Auswerteelektronik selbst überwacht werden. Wird eine Überschreitung der maximal zulässigen Temperatur festgestellt, kann dies einem verbundenen Zustandsüberwachungssystem bzw. einem Instandhaltungsmanagement-System gemeldet werden. Somit ist eine Überwachung der in der Elektronik auftretenden Temperaturen und gegebenenfalls eine Alarmierung eines Instandhalters möglich.

Bevorzugt ist zumindest eine Repeater Station vorgesehen, welche zumindest die von der ersten Trackingposition empfangenen Daten kabellos weiterleitet. Dies dient dazu, die Reichweite der kabellosen Datenübertragung zu erhöhen. Diese Repeater Stationen erfassen keine Messdaten, sie leiten nur die kabellos übertragenen Messwerte an die nächste Station weiter.

Bevorzugt ist der Transponder ein RFID-Transponder. Auch andere Transponder, die geeignet sind, können jedoch eingesetzt werden.

Bevorzugt ist die zumindest eine Lesestation mittels Batterie mit elektrischer Energie versorgbar. Auch kann die zumindest eine Lesestation ein Auswertesystem umfassen, welches zumindest die Batterietemperatur und/oder Batteriespannung und/oder Batteriestromstärke überwacht. D.h. dass die einzelnen Lesestationen vorzugsweise von einer Batterie versorgt werden. In diesem Fall ist die Lesestation vollkommen kabellos. Regelmäßige Batteriewechsel müssen in diesem Fall eingeplant werden. Wird die Spannungsversorgung als Batterie ausgeführt, kann das Auswertesystem daher so ausgeführt werden, dass es die Spannungsversorgung überwacht, z.B. hinsichtlich Batterietemperatur, Spannung, Stromstärke, Restkapazität.

Stellt das Auswertesystem fest, dass die Batterie einen kritischen Zustand erreicht, kann der Bediener über die Benutzersteuerung benachrichtigt werden. Genauso vorstellbar ist, dass das Auswertesystem ein verbundenes Zustandsüberwachungssystem (nachfolgend als Condition Monitoring System bezeichnet) alarmiert oder in einem Instandhaltungsmanagement-System einen Instandhaltungsauftrag erzeugt.

Auch kann zusätzlich oder alternativ die zumindest eine Lesestation mittels eines Kabels mit elektrischer Energie versorgbar sein. Zusätzlich oder alternativ kann die zumindest eine Lesestation durch Energy Harvesting mit elektrischer Energie versorgbar sein. Dies kann vor allem dann der Fall sein, wenn ein Batteriewechsel nicht erwünscht ist, oder dient als zusätzliche Sicherheit für eine störungsfreie Stromversorgung.

Bevorzugt ist der Transponder durch gesendete Funksignale der zumindest einen Lesestation abfragbar.

Bei der Metallindustrieanlage handelt es sich bevorzugt um eine metallurgische Industrieanlage, insbesondere ein Stahlwerk. Das Verfahren kann an der erfindungsgemäßen Metallindustrieanlage durchgeführt werden.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
- FIG 1: schematisch eine erfindungsgemäße Anlage,
- FIG 2: ein erstes Beispiel einer erfindungsgemäßen Trackingposition in der Anlage,
- FIG 3: ein zweites Beispiel einer erfindungsgemäßen Trackingposition in der Anlage,
- FIG 4: ein drittes Beispiel einer erfindungsgemäßen Trackingposition in der Anlage,
- FIG 5: ein Stahlwerk mit Trackingposition.

Obwohl die Erfindung im Detail durch das bevorzugte Ausführungsbeispiel näher illustriert und beschrieben wird, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Die Erfindung betrifft eine kabellose Datenverbindung von Trackingpositionen eines Verfolgungssystems, welches innerhalb eines Werks zur Verfolgung von metallurgischen Gefäßen verwendet wird.

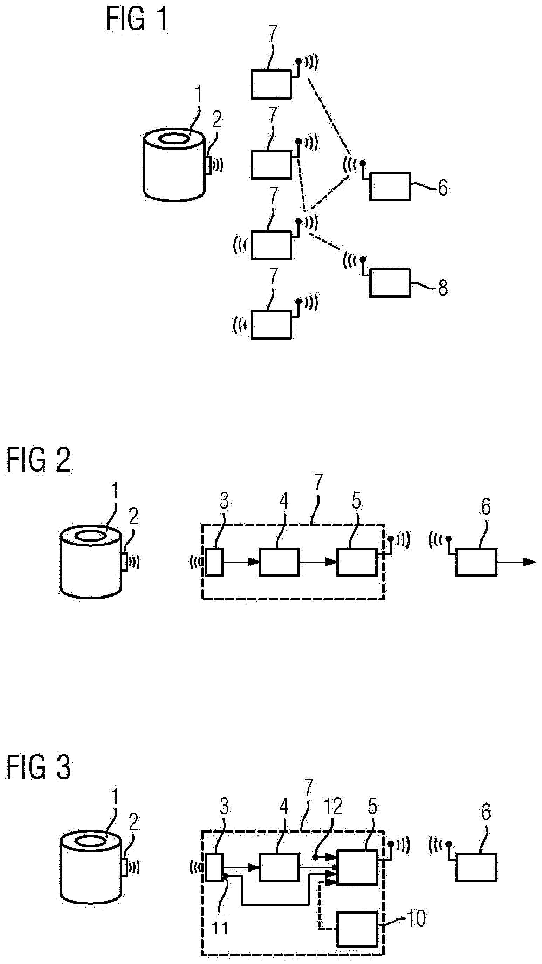

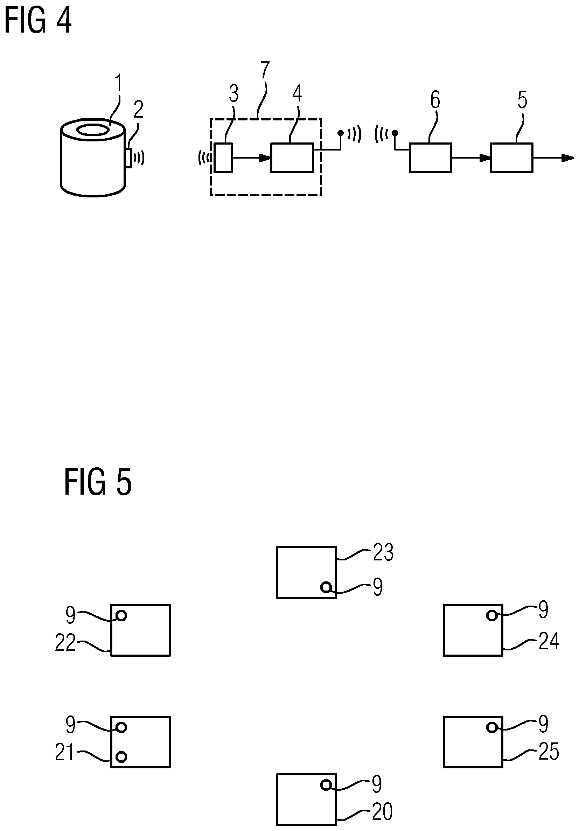

FIG 1 zeigt schematisch eine erfindungsgemäße Anlage. Für eine Verfolgung von metallurgischen Gefäßen werden typischerweise die Gefäße 1 mit einem Transponder 2 ausgerüstet. Dieser Transponder 2 kann fest oder lose mit dem Gefäß 1 verbunden sein. An mehreren Orten innerhalb eines Werks (denkbar ist aber auch außerhalb des Werksgeländes) befinden sich sogenannte Trackingpositionen 9 (FIG 5). Dabei wird unter Trackingposition 9 (FIG 5) der Ort verstanden, an dem die Daten für das Tracking durch eine dort vorhandene Lesestation 7 abgefragt werden (Ortungsposition). Ziel eines Tracking ist meist das Abbilden der beobachteten tatsächlichen Bewegung zur technischen Verwendung. Der Transponder 2, bevorzugt ein RFID-Transponder, wird mit Transponderdaten bespielt und an dem Gefäß 1 angebracht. Dies wird bevorzugt vor der ersten Inbetriebnahme des Gefäßes 1 vorgenommen. Aber auch danach können die bereits eingesetzten Gefäße 1 mit einem solchen Transponder 2 und den entsprechenden modifizierten Daten leicht ausgerüstet werden, so dass auch bereits in Betrieb genommene Gefäße 1 mit dieser Technik leicht nachgerüstet werden können. Wird ein Gefäß 1 mit Transponder 2 an solch einer Trackingposition 9 (FIG 5) vorbei geführt, wird dies durch die dort installierte Lesestation 7 erkannt. Da die einzelnen Lesestationen 7 weit voneinander entfernt sein können, werden diese über eine kabellose Schnittstelle untereinander bzw. über ein zentrales Gateway 6 miteinander kabellos verbunden. Ein Gateway 6 kann Rechnernetze verbinden, die z.B. auf völlig unterschiedlichen Netzwerkprotokollen basieren können. Als zentrales Gateway 6 oder auch Access Point wird jener Wireless Knoten bezeichnet, welcher für die Organisation des Netzwerks verantwortlich ist. Die einzelnen Lesestationen 7 können sich entweder alle zu diesem zentralen Gateway vernetzen oder sich im Falle eines Wireless HART oder ISA100 Netzwerks in Form eines vernetzten Gitters (Meshgrid) verbinden. Bei einem Gitter kann sich jede Lesestation 7 mit jeder anderen Lesestation 7 vernetzen. Dies hat den Vorteil, dass sehr große Flächen mit nur einem Gateway 6 abgedeckt werden können, gleichzeitig im Falle eines Ausfalls einer Lesestationen 7 jedoch eine Alternativroute über andere Lesestationen 7 zur Verfügung gestellt werden kann. Dies führt zu einer Erhöhung der Ausfallssicherheit. FIG 1 zeigt unter anderem einen solchen Fall. Hier ist eine Lesestation 7, welche zudem mit einer anderen Lesestation 7 und mit dem Gateway 6 verbunden ist. Auch können die Lesestationen 7 nur teilweise untereinander kabellos verbunden sein, oder auch vollständig oder auch nur mit dem Gateway 6. Es können sich daher alle Lesestationen 7 oder nur vereinzelte Lesestationen 7 zur Verfolgung von metallurgischen Gefäßen 1 kabellos miteinander verknüpfen.

Um die Reichweite der kabellosen Datenübertragung zu erhöhen, ist es möglich, sogenannte Repeater Stationen 8 vorzusehen. Dabei ist ein Repeater in der Kommunikationstechnik ein elektrischer oder auch optischer Signalverstärker oder -aufbereiter zur Vergrößerung der Reichweite eines Signals. Diese Repeater Stationen 8 erfassen keine Messdaten, sie leiten nur die kabellos übertragenen Messwerte an die nächste Station weiter. Dabei kann die nächste Station eine Trackingposition 9, ein Gateway 6 oder eine andere Repeater Station 8 sein. FIG 1 zeigt ebenfalls eine solche Repeater Station 8. Die kabellose Schnittstelle, mit welcher die einzelnen Lesestationen 7 mit dem/den Gateway/s 6 verbunden sind, können beispielsweise mit WLAN, Wireless HART, ISA100 oder jedem anderen Wireless Standard, mit welchem Daten übertragen werden können, realisiert werden. Auch können sie unter anderem selbst damit verbunden sein.

FIG 2 zeigt ein erstes Bespiel einer erfindungsgemäßen Trackingposition 9 (FIG 5) in der Anlage. In diesem Beispiel besteht eine Lesestation 7 aus einer Antenne 3 zur Kommunikation mit dem Transponder 2 mit einem Lesegerät 4 und einem Auswertesystem 5 mit kabelloser Schnittstelle. Das Auswertesystem 5 wertet die vom Lesegerät 4 erfassten Transponderdaten aus und sendet diese über die kabellose Schnittstelle an ein Gateway 6. Alle weiteren in der Anlage installierten Lesestationen 7 tun dies ebenso. Das zentrale Gateway 6 hat wiederum eine Schnittstelle, mit welcher die Daten einem Leitsystem bzw. einer Benutzersteuerung zur Verfügung gestellt werden können.

FIG 3 zeigt ein zweites Bespiel einer erfindungsgemäßen Trackingposition 9 (FIG 5) in der Anlage. Das Auswertesystem 5 zieht hier als zusätzliche Eingabe zumindest die Daten eines Neigungssensors oder Beschleunigungssensors 10 heran. Der Neigungssensor oder Beschleunigungssensor 10 wird vorzugsweise an der Antenne 3 befestigt. Aus dem Neigungssensor oder Beschleunigungssensor 10 wird die Neigung der Antenne 3 ermittelt. Das Ergebnis kann verwendet werden, um festzustellen, ob die Antenne 3 von z.B. einem vorbei fahrenden Fahrzeug oder Kran verstellt wurde.

Das Auswertesystem 5 kann als zusätzliche Eingabe zumindest die Daten eines Temperatursensors 11, 12 heranziehen. Mit diesem Temperatursensor 11 kann die Temperatur der Antenne 3 oder die Temperatur der Auswerteelektronik selbst (Temperatursensor 12) überwacht werden. Auch kann lediglich ein Temperatursensor vorhanden sein, welcher die Antennentemperatur und die Auswerteelektroniktemperatur überwacht. Wird in dem Gateway 6 anschließend eine Überschreitung der maximal zulässigen Temperatur festgestellt, kann dies einem verbundenen Condition Monitoring System (Zustandsüberwachungssystem) bzw. einem Instandhaltungsmanagement-System gemeldet werden.

FIG 4 zeigt ein drittes Bespiel einer erfindungsgemäßen Trackingposition 9 (FIG 5) in der Anlage. Hier ist das Auswertesystem 5 nicht an der Lesestation 7, sondern beim zentralen Gateway 6 vorgesehen. In diesem Fall holt das Auswertesystem 5 alle Daten vom zentralen Gateway 6 ab, wertet diese aus und stellt sie dann einem Leitsystem zur Verfügung. Eine Anordnung ohne Auswertesystem 5 ist ebenfalls denkbar (nicht gezeigt). In diesem Fall werden dem Leitsystem Rohdaten zur Verfügung gestellt (nicht gezeigt).

Die einzelnen Lesestationen 7 werden vorzugsweise von einer Batterie versorgt. In diesem Fall ist die Lesestation 7 vollkommen kabellos. Regelmäßige Batteriewechsel müssen in diesem Fall eingeplant werden. Ist dieser Batteriewechsel nicht erwünscht, kann eine kabelgebundene Spannungsversorgung der Lesestation 7 vorgesehen werden. Eine Energieversorgung über Energy Harvesting ist ebenfalls denkbar. Wird die Spannungsversorgung als Batterie ausgeführt, kann das Auswertesystem 5 so ausgeführt werden, dass sie die Spannungsversorgung überwacht, z.B. hinsichtlich Batterietemperatur, Spannung und Stromstärke. Stellt das Auswertesystem 5 fest, dass die Batterie einen kritischen Zustand erreicht, kann der Bediener über die Benutzersteuerung benachrichtigt werden. Genauso vorstellbar ist, dass das Auswertesystem 5 ein verbundenes Condition Monitoring System alarmiert oder in einem Instandhaltungsmanagement-System einen Instandhaltungsauftrag erzeugt.

Das Auswertesystem 5 kann auch den Zustand des verbundenen Lesegeräts 4 bzw. von sich selbst überwachen und an ein Condition Monitoring System bzw. ein Instandhaltungs-Management-System melden.

FIG 5 zeigt sehr schematisch und sehr beispielhaft eine Anlage mit Trackingpositionen 9 in einem Stahlwerk. Dabei kann als Gefäß 1 mit Transponder 2 (FIG 1) beispielsweise eine Stahlpfanne mit Transponder (nicht gezeigt) verwendet werden. Dabei können an den Stationen Pfannenauskleidungsstation 20, Hallenkran 21, Vakuumanlage 22, Pfannentransportwagen 23, Pfannenofen 24, Pfannendrehturm 25, Pfannenvorwärmer usw. Trackingpositionen 9 angebracht werden. Dabei können als Transponderdaten aufgebracht werden, um welche Pfanne es sich handelt und welche Lebensdauer diese Pfannenauskleidung noch hat. Auch kann z.B. die gemessene Temperatur als Transponderdatum aufgenommen werden. Durch diese Transponderdaten kann die aktuelle Standzeit der Pfanne ermittelt werden. Auch kann die Anzahl der Durchläufe ermittelt werden und die Lebensdauer der Pfannenauskleidung dadurch bestimmt werden. Eine Rückschreibung vom Gateway auf den Transponder ist u.U. auch möglich. Auch müssen nicht an allen Trackingpositionen jeweils alle Daten ermittelt und übertragen werden.

### Bezugszeichenliste

- 1: Gefäß
- 2: Transponder
- 3: Antenne
- 4: Lesegerät
- 5: Auswertesystem
- 6: Gateway
- 7: Lesestation
- 8: Repeater Station
- 9: Trackingposition
- 10: Beschleunigungs-/Neigungssensor
- 11,12: Temperatursensor
- 20: Pfannenauskleidungsstation
- 21: Roheisenpfanne
- 22: Vakuumanlage
- 23: Pfannentransportwagen
- 24: Pfannenofen
- 25: Pfannendrehturm
- 26: Pfannenvorwärmer

## Patentansprüche

1. Metallindustrieanlage mit mehreren Verarbeitungsstationen, welche ein Gefäß (1), insbesondere ein metallurgisches Gefäß (1), zumindest teilweise durchläuft,
**dadurch gekennzeichnet, dass** das Gefäß (1) mit einem Transponder (2) mit Transponderdaten, ausgerüstet ist,
- wobei in der Metallindustrieanlage zumindest eine erste Trackingposition (9), welche zumindest eine erste Lesestation (7) umfasst, zum Kommunizieren des an der ersten Trackingposition (9) vorbeifahrenden Gefäßes (1) mit Hilfe des Transponders (2), insbesondere zum Identifizieren des vorbeifahrenden Gefäßes (1) mit dem Transponderdaten, vorgesehen ist,
- wobei die Lesestation (7) zumindest eine Antenne (3) zum Kommunizieren mit dem Transponder und ein Lesegerät (4) mit einer kabellosen Schnittstelle zum kabellosen Senden zumindest der empfangenen Transponderdaten an das Gateway (6) umfasst,
- wobei in der Metallindustrieanlage zumindest ein Gateway (6) vorgesehen ist, das eine kabellose Schnittstelle zur kabellosen Übermittlung zumindest der Transponderdaten von der kabellosen Schnittstelle der Lesestation (7) umfasst,
- wobei die Lesestation (7) ein Auswertesystem (5) zum Auswerten der empfangenen Transponderdaten umfasst oder dem Gateway (6) ein Auswertesystem (5) nachgeschaltet ist.

2. Metallindustrieanlage nach Anspruch 1,
**dadurch gekennzeichnet, dass**
die Metallindustrieanlage eine zweite Trackingposition (9) aufweist, welche zumindest eine zweite Lesestation (7) umfasst, zum Kommunizieren des vorbeifahrenden Gefäßes (1) mit Hilfe des Transponders (2), insbesondere zum Identifizieren des vorbeifahrenden Gefäßes (1) mit den Transponderdaten, und wobei zumindest die erste und die zweite Trackingposition (9) mit dem Gateway (6) kabellos als auch untereinander kabellos verbunden sind und wodurch das Gefäß (1) kabellos verfolgbar ist.

3. Metallindustrieanlage nach einem der vorhergehenden Ansprüche,
**dadurch gekennzeichnet, dass**
die Metallindustrieanlage eine zweite Trackingposition (9) aufweist, welche zumindest eine zweite Lesestation (7) umfasst, zum Kommunizieren des vorbeifahrenden Gefäßes (1) mit Hilfe des Transponders (2), insbesondere zum Identifizieren des vorbeifahrenden Gefäßes (1) mit den Transponderdaten, und wobei zumindest die erste und die zweite Trackingposition (9) untereinander kabellos verbunden sind, und wodurch die zweite Trackingposition (9) über die erste Trackingposition (9) mit dem Gateway (6) verbunden ist und wodurch das Gefäß (1) kabellos verfolgbar ist.

4. Metallindustrieanlage nach einem der Ansprüche 1 bis 3,
**dadurch gekennzeichnet, dass**
die Lesestation (7) zumindest einen Sensor, insbesondere einen Neigungs- und/oder Beschleunigungssensor (10) aufweist, welcher die Neigungsdaten der Antenne (3) ermittelt.

5. Metallindustrieanlage nach Anspruch 4,
**dadurch gekennzeichnet, dass**
der Sensor an der Antenne (3) vorgesehen ist.

6. Metallindustrieanlage nach einem der vorhergehenden Ansprüche,
**dadurch gekennzeichnet, dass**
die Lesestation (7) einen Temperatursensor (11,12) umfasst zum Messen der Temperatur der Lesestation (7), insbesondere einer Antenne (3) in der Lesestation (7), und eine Überschreitung der maximal zulässigen Temperatur anzeigbar ist.

7. Metallindustrieanlage nach einem der vorhergehenden Ansprüche,
**dadurch gekennzeichnet, dass**
die Metallindustrieanlage zumindest eine Repeater Station (8) umfasst, welche zumindest die von der ersten Trackingposition (9) empfangenen Daten kabellos weiterleitet.

8. Metallindustrieanlage nach einem der vorhergehenden Ansprüche,
**dadurch gekennzeichnet, dass**
der Transponder (2) ein RFID-Transponder (2) ist.

9. Metallindustrieanlage nach einem der vorhergehenden Ansprüche,
**dadurch gekennzeichnet, dass**
die zumindest eine Lesestation (7) mittels Batterie mit elektrischer Energie versorgbar ist.

10. Metallindustrieanlage nach Anspruch 9,
**dadurch gekennzeichnet, dass**
die zumindest eine Lesestation (7) ein Auswertesystem (5) umfasst, welches zumindest die Batterietemperatur und/oder Batteriespannung und/oder Batteriestromstärke überwacht.

11. Metallindustrieanlage nach einem der vorhergehenden Ansprüche,
**dadurch gekennzeichnet, dass**
die zumindest eine Lesestation (7) mittels eines Kabels mit elektrischer Energie versorgbar ist.

12. Metallindustrieanlage nach einem der vorhergehenden Ansprüche,
**dadurch gekennzeichnet, dass**
die zumindest eine Lesestation (7) durch Energy Harvesting mit elektrischer Energie versorgbar ist.

13. Metallindustrieanlage nach einem der vorhergehenden Ansprüche,
**dadurch gekennzeichnet, dass**
der Transponder (2) durch gesendete Funksignale der zumindest einen Lesestation (7) abfragbar ist.

14. Metallindustrieanlage nach einem der vorhergehenden Ansprüche, wobei es sich bei der Metallindustrieanlage um eine metallurgische Industrieanlage, insbesondere ein Stahlwerk, handelt.

15. Verfahren zur Verfolgung eines metallurgischen Gefäßes (1) in einer Metallindustrieanlage mit mehreren Verarbeitungsstationen, welche das metallurgische Gefäß (1) zumindest teilweise durchläuft,
**dadurch gekennzeichnet, dass**
das metallurgische Gefäß (1) mit einem Transponder (2) mit Transponderdaten ausgerüstet wird,
wobei das an einer ersten Trackingposition (9) vorbei fahrende Gefäß (1) mit Hilfe des Transponders (2) mit der ersten Trackingposition (9), umfassend zumindest eine erste Lesestation (7), kommuniziert, insbesondere das vorbeifahrende Gefäß (1) mit den Transponderdaten identifiziert wird,
wobei die erste Lesestation (7) zumindest die Transponderdaten durch eine kabellose Schnittstelle in der Lesestation (7) kabellos an ein Gateway (6) übermittelt,
wobei ein Auswertesystem (5) der Lesestation (7) die empfangenen Transponderdaten auswertet oder dem Gateway (6) ein Auswertesystem (5) nachgeschaltet wird.

16. Verfahren nach Anspruch 15,
**dadurch gekennzeichnet, dass**
die Metallindustrieanlage eine zweite Trackingposition (9) aufweist, welche zumindest eine zweite Lesestation (7) umfasst zum Kommunizieren des vorbeifahrenden Gefäßes (1) mit Hilfe des Transponders (2), insbesondere zum Identifizieren des vorbeifahrenden Gefäßes (1) mit den Transponderdaten, und wobei zumindest die erste und die zweite Trackingposition (9) mit dem Gateway (6) kabellos als auch untereinander kabellos verbunden werden und wobei das Gefäß (1) dadurch kabellos nachverfolgt wird.

17. Verfahren nach einem der Ansprüche 15 oder 16,
**dadurch gekennzeichnet, dass**
die Metallindustrieanlage eine zweite Trackingposition (9) aufweist, welche zumindest eine zweite Lesestation (7) umfasst zum Kommunizieren des vorbeifahrenden Gefäßes (1) mit Hilfe des Transponders (2), insbesondere zum Identifizieren des vorbeifahrenden Gefäßes (1) mit den Transponderdaten, und wobei zumindest die erste und die zweite Trackingposition (9) untereinander kabellos verbunden sind, und wodurch die zweite Trackingposition (9) über die erste Trackingposition (9) mit dem Gateway (6) kabellos verbunden wird und wobei das Gefäß (1) dadurch kabellos nachverfolgt wird.

18. Verfahren nach einem der Ansprüche 15 bis 17,
**dadurch gekennzeichnet, dass**
die Lesestation (7) eine Antenne (3) zum Kommunizieren mit dem Transponder (2) umfasst und die Ermittlung der Neigung der Antenne (3) durch einen Sensor, insbesondere einen Neigungs- und/oder Beschleunigungssensor (10), erfolgt.

19. Verfahren nach Anspruch 18,
**dadurch gekennzeichnet, dass**
der Sensor an der Antenne (3) angebracht wird.

20. Verfahren nach einem der Ansprüche 15 bis 19,
**dadurch gekennzeichnet, dass**
ein Messen der Temperatur der Lesestation (7), insbesondere der Antenne (3) der Lesestation (7), durch einen Temperatursensor (11,12) in der Lesestation (7) erfolgt und eine Überschreitung der maximal zulässigen Temperatur gemeldet wird.

21. Verfahren nach einem der Ansprüche 15 bis 20,
**dadurch gekennzeichnet, dass**
eine kabellose Weiterleitung von zumindest einer auf der Metallindustrieanlage angebrachten Repeater Station (8) erfolgt, welche zumindest die von der ersten Trackingposition (9) empfangenen Daten weiterleitet.

22. Verfahren nach einem der Ansprüche 15 bis 21,
**dadurch gekennzeichnet, dass**
die Versorgung der zumindest einen Lesestation (7) mit elektrischer Energie durch eine Batterie erfolgt.

23. Verfahren nach Anspruch 22,
**dadurch gekennzeichnet, dass**
eine Überwachung zumindest der Batterietemperatur und/oder der Batteriespannung und/oder der Batteriestromstärke durch ein Auswertesystem (5) in der Lesestation (7) erfolgt.

24. Verfahren nach einem der Ansprüche 15 bis 23,
**dadurch gekennzeichnet, dass**
die Versorgung der zumindest einen Lesestation (7) mit elektrischer Energie durch ein Kabel erfolgt.

25. Verfahren nach einem der Ansprüche 15 bis 24,
**dadurch gekennzeichnet, dass**
die Versorgung der zumindest einen Lesestation (7) mit elektrischer Energie durch Energy Harvesting erfolgt.

26. Verfahren nach einem der Ansprüche 15 bis 25,
**dadurch gekennzeichnet, dass**
die Lesestation (7) Funksignale zum Abfragen des Transponders (2) sendet.

## Claims

1. Metal industry installation having a plurality of processing stations through which a vessel (1), in particular a metallurgical vessel (1), at least partially passes,
**characterized in that**
the vessel (1) is equipped with a transponder (2) having transponder data,
- wherein at least one first tracking position (9) is provided in Metal industry installation and comprises at least one first reading station (7) for communication of the vessel (1) moving past the first tracking position (9) with the aid of the transponder (2), in particular for identifying the vessel (1) moving past using the transponder data,
- wherein the reading station (7) comprises at least one antenna (3) for communicating with the transponder and a reader (4) having a wireless interface for wirelessly transmitting at least the received transponder data to the gateway (6),
- wherein at least one gateway (6) is provided in Metal industry installation, which gateway comprises a wireless interface for wirelessly transmitting at least the transponder data from the wireless interface of the reading station (7),
- wherein the reading station (7) comprises an evaluation system (5) for evaluating the received transponder data, or an evaluation system (5) is connected downstream of the gateway (6).

2. Metal industry installation as claimed in Claim 1,
**characterized in that**
Metal industry installation has a second tracking position (9) comprising at least one second reading station (7) for communication of the vessel (1) moving past with the aid of the transponder (2), in particular for identifying the vessel (1) moving past using the transponder data, wherein at least the first and second tracking positions (9) are wirelessly connected to the gateway (6) and are wirelessly connected to one another, as a result of which the vessel (1) can be wirelessly tracked.

3. Metal industry installation as claimed in one of the preceding claims,
**characterized in that**
Metal industry installation has a second tracking position (9) comprising at least one second reading station (7) for communication of the vessel (1) moving past with the aid of the transponder (2), in particular for identifying the vessel (1) moving past using the transponder data, wherein at least the first and second tracking positions (9) are wirelessly connected to one another, as a result of which the second tracking position (9) is connected to the gateway (6) via the first tracking position (9) and as a result of which the vessel (1) can be wirelessly tracked.

4. Metal industry installation as claimed in one of Claims 1 to 3,
**characterized in that**
the reading station (7) has at least one sensor, in particular an inclination and/or acceleration sensor (10), which determines the inclination data relating to the antenna (3).

5. Metal industry installation as claimed in Claim 4,
**characterized in that**
the sensor is provided on the antenna (3).

6. Metal industry installation as claimed in one of the preceding claims,
**characterized in that**
the reading station (7) comprises a temperature sensor (11, 12) for measuring the temperature of the reading station (7), in particular of an antenna (3) in the reading station (7), and exceeding of the maximum permissible temperature can be displayed.

7. Metal industry installation as claimed in one of the preceding claims,
**characterized in that**
Metal industry installation comprises at least one repeater station (8) which wirelessly forwards at least the data received from the first tracking position (9).

8. Metal industry installation as claimed in one of the preceding claims,
**characterized in that**
the transponder (2) is an RFID transponder (2).

9. Metal industry installation as claimed in one of the preceding claims,
**characterized in that**
the at least one reading station (7) can be supplied with electrical energy by means of a battery.

10. Metal industry installation as claimed in Claim 9,
**characterized in that**
the at least one reading station (7) comprises an evaluation system (5) which monitors at least the battery temperature and/or battery voltage and/or battery current intensity.

11. Metal industry installation as claimed in one of the preceding claims,
**characterized in that**
the at least one reading station (7) can be supplied with electrical energy by means of a cable.

12. Metal industry installation as claimed in one of the preceding claims,
**characterized in that**
the at least one reading station (7) can be supplied with electrical energy by means of energy harvesting.

13. Metal industry installation as claimed in one of the preceding claims, **characterized in that**
the transponder (2) can be queried by means of transmitted radio signals from the at least one reading station (7).

14. Metal industry installation as claimed in one of the preceding claims, wherein Metal industry installation is a metallurgical industrial installation, in particular a steelworks.

15. Method for tracking a metallurgical vessel (1) in a metal industry installation having a plurality of processing stations through which Metallurgical vessel (1) at least partially passes,
**characterized in that**
Metallurgical vessel (1) is equipped with a transponder (2) having transponder data,
wherein the vessel (1) moving past a first tracking position (9) communicates with the first tracking position (9) comprising at least one first reading station (7) with the aid of the transponder (2), in particular the vessel (1) moving past is identified using the transponder data,
wherein the first reading station (7) wirelessly transmits at least the transponder data to a gateway (6) through a wireless interface in the reading station (7),
wherein an evaluation system (5) of the reading station (7) evaluates the received transponder data, or an evaluation system (5) is connected downstream of the gateway (6).

16. Method as claimed in Claim 15,
**characterized in that**
Metal industry installation has a second tracking position (9) comprising at least one second reading station (7) for communication of the vessel (1) moving past with the aid of the transponder (2), in particular for identifying the vessel (1) moving past using the transponder data, wherein at least the first and second tracking positions (9) are wirelessly connected to the gateway (6) and are wirelessly connected to one another, and wherein the vessel (1) is wirelessly tracked thereby.

17. Method as claimed in either of Claims 15 and 16,
**characterized in that**
Metal industry installation has a second tracking position (9) comprising at least one second reading station (7) for communication of the vessel (1) moving past with the aid of the transponder (2), in particular for identifying the vessel (1) moving past using the transponder data, wherein at least the first and second tracking positions (9) are wirelessly connected to one another, as a result of which the second tracking position (9) is wirelessly connected to the gateway (6) via the first tracking position (9), and wherein the vessel (1) is wirelessly tracked thereby.

18. Method as claimed in one of Claims 15 to 17,
**characterized in that**
the reading station (7) comprises an antenna (3) for communicating with the transponder (2) and the inclination of the antenna (3) is determined by means of a sensor, in particular an inclination and/or acceleration sensor (10).

19. Method as claimed in Claim 18,
**characterized in that**
the sensor is fitted to the antenna (3).

20. Method as claimed in one of Claims 15 to 19,
**characterized in that**
the temperature of the reading station (7), in particular of the antenna (3) of the reading station (7), is measured by means of a temperature sensor (11, 12) in the reading station (7), and exceeding of the maximum permissible temperature is reported.

21. Method as claimed in one of Claims 15 to 20,
**characterized in that**
at least one repeater station (8) fitted on Metal industry installation carries out wireless forwarding and forwards at least the data received from the first tracking position (9).

22. Method as claimed in one of Claims 15 to 21,
**characterized in that**
the at least one reading station (7) is supplied with electrical energy by means of a battery.

23. Method as claimed in Claim 22,
**characterized in that**
at least the battery temperature and/or the battery voltage and/or the battery current intensity is/are monitored by means of an evaluation system (5) in the reading station (7).

24. Method as claimed in one of Claims 15 to 23,
**characterized in that**
the at least one reading station (7) is supplied with electrical energy by means of a cable.

25. Method as claimed in one of Claims 15 to 24,
**characterized in that**
the at least one reading station (7) is supplied with electrical energy by means of energy harvesting.

26. Method as claimed in one of Claims 15 to 25,
**characterized in that**
the reading station (7) transmits radio signals for querying the transponder (2).

## Revendications

1. Installation métallurgique comportant plusieurs postes de transformation, traversées au moins de manière partielle par un récipient (1), en particulier un récipient métallurgique (1),
**caractérisée en ce que**
le récipient (1) est équipé d'un transpondeur (2) muni de données de transpondeur,
- dans laquelle au moins une première position de suivi (9), qui comporte au moins un premier poste de lecture (7) destiné à une communication du récipient (1) franchissant la première position de suivi (9), à l'aide du transpondeur (2), en particulier destiné à une identification du récipient (1) en cours de franchissement grâce aux données de transpondeur, est prévue au sein de ladite installation métallurgique,
- dans laquelle le poste de lecture (7) comprend au moins une antenne (3) destinée à une communication avec le transpondeur et un appareil de lecture (4) muni d'une interface sans fil destinée à un envoi sans fil d'au moins les données de transpondeur reçues vers le point de passage (6),
- dans laquelle au moins un point de passage (6) est prévu au sein de l'installation métallurgique, ledit point comprenant une interface sans fil destinée à une transmission sans fil d'au moins les données de transpondeur issues de l'interface sans fil du poste de lecture (7),
- dans laquelle le poste de lecture (7) comprend un système d'évaluation (5) destiné à évaluer les données de transpondeur reçues, ou un système d'évaluation (5) est raccordé après le point de passage (6).

2. Installation métallurgique selon la revendication 1,
**caractérisée en ce que**
l'installation métallurgique présente une deuxième position de suivi (9) qui comprend au moins un deuxième poste de lecture (7), destiné à une communication du récipient (1) en cours de franchissement, à l'aide du transpondeur (2), en particulier destiné à l'identification du récipient (1) en cours de franchissement grâce aux données de transpondeur, et dans laquelle au moins les première et deuxième positions de suivi (9) sont reliées sans fil au point de passage (6) mais également sans fil l'une à l'autre, et grâce à quoi le récipient (1) peut être suivi sans fil.

3. Installation métallurgique selon l'une quelconque des revendications précédentes,
**caractérisée en ce que**
l'installation métallurgique présente une deuxième position de suivi (9) qui comprend au moins un deuxième poste de lecture (7), destiné à une communication du récipient (1) en cours de franchissement, à l'aide du transpondeur (2), en particulier destiné à une identification du récipient (1) en cours de franchissement grâce aux données de transpondeur, et dans laquelle au moins les première et deuxième positions de suivi (9) sont reliées sans fil l'une à l'autre, et grâce à quoi la deuxième position de suivi (9) est reliée au point de passage (6) par l'intermédiaire de la première position de suivi (9) et grâce à quoi le récipient (1) peut être suivi sans fil.

4. Installation métallurgique selon l'une quelconque des revendications 1 à 3,
**caractérisée en ce que**
le poste de lecture (7) présente au moins un capteur, en particulier un capteur d'inclinaison et/ou d'accélération (10), qui détermine les données d'inclinaison de l'antenne (3) .

5. Installation métallurgique selon la revendication 4,
**caractérisée en ce que**
le capteur est prévu au niveau de l'antenne (3).

6. Installation métallurgique selon l'une quelconque des revendications précédentes,
**caractérisée en ce que**
le poste de lecture (7) comprend un capteur de température (11, 12) destiné à une mesure de la température du poste de lecture (7), en particulier d'une antenne (3) située dans le poste de lecture (7), et un dépassement de la température maximale admissible peut être indiqué.

7. Installation métallurgique selon l'une quelconque des revendications précédentes,
**caractérisée en ce que**
l'installation métallurgique comprend au moins un poste répétiteur (8) qui redirige sans fil au moins les données reçues issues de la première position de suivi (9).

8. Installation métallurgique selon l'une quelconque des revendications précédentes,
**caractérisée en ce que**
le transpondeur (2) est un transpondeur RFID (2).

9. Installation métallurgique selon l'une quelconque des revendications précédentes,
**caractérisée en ce que**
le au moins un poste de lecture (7) peut être alimenté en énergie électrique par batterie.

10. Installation métallurgique selon la revendication 9,
**caractérisée en ce que**
le au moins un poste de lecture (7) comprend un système d'évaluation (5) qui surveille au moins la température de batterie et/ou la tension de batterie et/ou l'intensité de batterie.

11. Installation métallurgique selon l'une quelconque des revendications précédentes,
**caractérisée en ce que**
le au moins un poste de lecture (7) peut être alimenté en énergie électrique au moyen d'un câble.

12. Installation métallurgique selon l'une quelconque des revendications précédentes,
**caractérisée en ce que**
le au moins un poste de lecture (7) peut être alimenté en énergie électrique par collecte d'énergie.

13. Installation métallurgique selon l'une quelconque des revendications précédentes,
**caractérisée en ce que**
le transpondeur (2) peut être interrogé grâce à des signaux radio émis par le au moins un poste de lecture (7).

14. Installation métallurgique selon l'une quelconque des revendications précédentes, l'installation métallurgique étant une installation industrielle métallurgique, en particulier une aciérie.

15. Procédé de suivi d'un récipient métallurgique (1) dans une installation métallurgique comprenant plusieurs postes de travail que parcourt au moins partiellement le récipient métallurgique (1),
**caractérisé en ce que**
le récipient métallurgique (1) est équipé d'un transpondeur (2) comprenant des données de transpondeur,
dans lequel le récipient (1) franchissant une première position de suivi (9) communique avec la première position de suivi (9), comprenant au moins un premier poste de lecture (7), à l'aide du transpondeur (2), le récipient (1) en cours de franchissement étant en particulier identifié grâce aux données de transpondeur,
dans lequel le premier poste de lecture (7) transmet sans fil au moins les données de transpondeur à un point de passage (6) grâce à une interface sans fil située dans le poste de lecture (7),
dans lequel un système d'évaluation (5) du poste de lecture (7) évalue les données de transpondeur reçues, ou un système d'évaluation (5) est raccordé après le point de passage (6).

16. Procédé selon la revendication 15,
**caractérisé en ce que**
l'installation métallurgique présente une deuxième position de suivi (9) qui comprend au moins un deuxième poste de lecture (7) destiné à une communication du récipient (1) en cours de franchissement, à l'aide du transpondeur (2), en particulier destiné à une identification du récipient (1) en cours de franchissement grâce aux données de transpondeur, et dans lequel au moins les première et deuxième positions de suivi (9) sont reliées sans fil au point de passage (6) mais aussi sans fil l'une à l'autre, et dans lequel le récipient (1) est ainsi suivi sans fil.

17. Procédé selon la revendication 15 ou 16,
**caractérisé en ce que**
l'installation métallurgique présente une deuxième position de suivi (9) qui comprend au moins un deuxième poste de lecture (7) destiné à une communication du récipient (1) en cours de franchissement, à l'aide du transpondeur (2), en particulier destiné à une identification du récipient (1) en cours de franchissement grâce aux données de transpondeur, et dans lequel au moins les première et deuxième positions de suivi (9) sont reliées l'une à l'autre sans fil, et grâce à quoi la deuxième position de suivi (9) est reliée sans fil au point de passage (6) par l'intermédiaire de la première position de suivi (9) et dans lequel le récipient (1) est ainsi suivi sans fil.

18. Procédé selon l'une quelconque des revendications 15 à 17,
**caractérisé en ce que**
le poste de lecture (7) comprend une antenne (3) destinée à une communication avec le transpondeur (2) et la détermination de l'inclinaison de l'antenne (3) a lieu grâce à un capteur, en particulier un capteur d'inclinaison et/ou d'accélération (10) .

19. Procédé selon la revendication 18,
**caractérisé en ce que**
le capteur est installé au niveau de l'antenne (3).

20. Procédé selon l'une quelconque des revendications 15 à 19,
**caractérisé en ce que**
une mesure de la température du poste de lecture (7), en particulier de l'antenne (3) du poste de lecture (7), a lieu situé dans le poste de lecture (7) grâce à un capteur de température (11, 12), et un dépassement de la température maximale admissible est indiquée.

21. Procédé selon l'une quelconque des revendications 15 à 20,
**caractérisé en ce que**
une redirection sans fil d'au moins un poste répétiteur (18) installé sur l'installation métallurgique a lieu, ladite redirection redirigeant au moins les données reçues issues de la première position de suivi (9).

22. Procédé selon l'une quelconque des revendications 15 à 21,
**caractérisé en ce que**
l'alimentation en énergie électrique du au moins un poste de lecture (7) a lieu grâce à une batterie.

23. Procédé selon la revendication 22,
**caractérisé en ce que**
une surveillance d'au moins la température de batterie et/ou la tension de batterie et/ou l'intensité de batterie a lieu grâce à un système d'évaluation (5) présent au sein du poste de lecture (7).

24. Procédé selon l'une quelconque des revendications 15 à 23,
**caractérisé en ce que**
l'alimentation en énergie électrique du au moins un poste de lecture (7) a lieu grâce à un câble.

25. Procédé selon l'une quelconque des revendications 15 à 24,
**caractérisé en ce que**
l'alimentation en énergie électrique du au moins un poste de lecture (7) a lieu par collecte d'énergie.

26. Procédé selon l'une quelconque des revendications 15 à 25,
**caractérisé en ce que**
le poste de lecture (7) émet des signaux radio destinés à une interrogation du transpondeur (2).
